# EUROPÄISCHE PATENTSCHRIFT

(11) **EP 3 350 039 B1**
(45) Veröffentlichungstag und Bekanntmachung des Hinweises auf die Patenterteilung: **02.10.2019**
(21) Anmeldenummer: 16738762.0
(22) Anmeldetag: 13.07.2016
(51) Int. Cl.: B60T 13/74, F16H 25/20

(54) **BREMSKRAFTVERSTÄRKER UND BREMSEINRICHTUNG MIT EINEM DERARTIGEN BREMSKRAFTVERSTÄRKER**
BRAKE BOOSTER AND BRAKE DEVICE HAVING A BRAKE BOOSTER OF THIS TYPE
SERVOFREIN ET SYSTÈME DE FREINAGE MUNI DUDIT SERVOFREIN

(30) Priorität: 14.09.2015 DE 102015217548
(43) Veröffentlichungstag der Anmeldung: 25.07.2018
(73) Patentinhaber: Robert Bosch GmbH, 70442 Stuttgart (DE)
(72) Erfinder: OHM, Andreas, 74635 Kupferzell (DE); WEISSINGER, Daniel, 70825 Korntal-Muenchingen (DE); DEBERLING, Andreas, 71638 Ludwigsburg (DE); BAUR, Markus, 88167 Gestratz (DE); NAGEL, Willi, 71686 Remseck/Hochdorf (DE)
(86) Internationale Anmeldenummer: PCT/EP2016/066623
(87) Internationale Veröffentlichungsnummer: WO 2017/045796

(56) Entgegenhaltungen:
- EP-A1- 0 277 097
- DE-A1-102012 014 361
- DE-A1-102013 006 795
- JP-A- 2013 071 536

## Beschreibung

Die Erfindung betrifft einen Bremskraftverstärker für einen Hauptbremszylinder eines Kraftfahrzeugs, mit einem Antriebsmotor, der durch ein Getriebe mit einem Druckkolben für den Hauptbremszylinder verbunden oder verbindbar ist, wobei das Getriebe eine drehbare Spindelmutter mit einem Innengewinde und eine drehfeste, axial verlagerbare Spindelstange mit einem Außengewinde aufweist, wobei die Gewinde miteinander in Eingriff stehen, um eine Rotationsbewegung des Antriebsmotors in eine Translationsbewegung des Druckkolbens zu wandeln, und wobei die Spindelmutter eine Außenverzahnung aufweist, die in Eingriff mit einer Verzahnung eines Antriebsrads des Getriebes steht. Ferner betrifft die Erfindung eine Bremseinrichtung für ein Kraftfahrzeug, mit einem von einem Fahrer betätigbaren Bremspedal, das mechanisch mit einem Druckkolben für den Hauptbremszylinder gekoppelt ist.

### Stand der Technik

Bremskraftverstärker und Bremseinrichtungen der eingangs genannten Art sind aus dem Stand der Technik bereits bekannt.

Bremskraftverstärker und Bremseinrichtungen der eingangs genannten Art sind aus dem Stand der Technik bereits bekannt. So offenbart beispielsweise die Offenlegungsschrift DE 10 2012 014 361 A1 einen Bremskraftverstärker für einen Hauptbremszylinder eines Kraftfahrzeugs, der einen Antriebsmotor und ein den Antriebsmotor mit einem Druckkolben des Hauptbremszylinders verbindendes Getriebe aufweist. Das Getriebe weist dabei einen Abschnitt auf, der als Spindelgetriebe ausgebildet ist, um eine Rotationsbewegung des Antriebsmotors in eine Translationsbewegung der Spindelstange zur Betätigung des Druckkolbens zu wandeln. Das Spindelgetriebe weist dazu eine Spindelmutter mit einem Innengewinde und eine Spindelstange mit einem Außengewinde auf, wobei die beiden Gewinde in Eingriff miteinander stehen, um die Rotationsbewegung in eine Translationsbewegung zu wandeln. Es ist außerdem bekannt, Spindelgetriebe mit Trapezgewinden zu versehen, sodass sowohl das Innengewinde als auch das Außengewinde als Trapezgewinde ausgebildet sind und entsprechend ineinander greifen. Zum Antreiben der Spindelmutter ist es außerdem bekannt, die Spindelmutter mit einer Außenverzahnung zu versehen, welche mit der Verzahnung eines Antriebsrads des Getriebes kämmt, um das von dem Antriebsmotor bereitgestellte Drehmoment auf die Spindelmutter zu übertragen. Dabei kann das Antriebsrad beispielsweise neben der Spindelmutter derart angeordnet sein, dass die Drehachsen von Spindelmutter und Antriebsrad parallel zueinander ausgerichtet sind.

### Offenbarung der Erfindung

Der erfindungsgemäße Bremskraftverstärker hat gegenüber den bekannten Ausführungsformen den Vorteil, dass ein Notlaufbetrieb gewährleistet wird, der eine Betätigung des Hauptbremszylinders durch den Fahrer unabhängig von einer Ansteuerung des Antriebsmotors erlaubt. Insbesondere kann der Fahrer das Bremspedal betätigen und den Druckkolben zur Betätigung des Hauptbremszylinders translatorisch verlagern, ohne dabei das Getriebe oder den Bremskraftverstärker zu beschädigen. Die Erfindung erlaubt somit eine vorteilhafte Integration des Bremskraftverstärkers in ein bestehendes Bremssystem und einen zerstörungsfreien Notlaufbetrieb. Der erfindungsgemäße Bremskraftverstärker zeichnet sich dadurch aus, dass die Spindelmutter axial zu dem Antriebsrad verlagerbar ist. Durch die axiale Verlagerbarkeit kann die Spindelmutter mit der Spindelstange axial mitbewegt beziehungsweise translatorisch verlagert werden. Wenn der Benutzer durch Betätigen des Bremspedals eine ausreichend hohe Kraft aufbringt, kann er somit dafür sorgen, dass die Spindelstange bewegt und dadurch die Spindelmutter mitgenommen und axial zu dem Antriebsrad verlagert wird. Durch die axiale Verlagerbarkeit der Spindelmutter wird somit gewährleistet, dass das Spindelgewinde nicht beschädigt wird, wenn der Benutzer eine entsprechend hohe Bremskraft auf das Bremspedal ausübt, um den Druckkolben zu bewegen.

Besonders bevorzugt ist vorgesehen, dass sich die Außenverzahnung der Spindelmutter über einen hülsenförmigen Abschnitt der Spindelmutter weiter erstreckt als die Verzahnung des Antriebsrads, sodass Außenverzahnung und Verzahnung unabhängig von einer axialen Verlagerung der Spindelmutter zur Drehmitnahme in Eingriff stehen. Die Spindelmutter und das Antriebsrad sind somit auch dann noch miteinander verzahnt, wenn die Spindelmutter axial zu einer Ausgangsposition verschoben wurde. Dadurch ist es auch bei bereits verschobener Spindelmutter noch möglich, dass durch Ansteuerung des Antriebsmotors, der insbesondere als Elektromotor ausgebildet ist, der Fahrer durch ein elektromotorisch erzeugtes Drehmoment, das von dem Antriebsrad auf die Spindelmutter wirkt, unterstützt wird. Dadurch kann der Fahrer jederzeit durch den Bremskraftverstärker im Betrieb unterstützt werden. Dadurch wird es beispielsweise ermöglicht, dass dann, wenn ein Benutzer das Bremspedal schneller betätigt, als der Antriebsmotor reagieren kann, dieser zwar nicht gleich zu Beginn der Betätigung aber doch im weiteren Verlauf innerhalb kürzester Zeit ein zusätzliches Bremsmoment erzeugen kann, beispielsweise nämlich auch noch dann, wenn die Spindelstange bereits ein Stück axial verschoben wurde.

Gemäß einer bevorzugten Weiterbildung der Erfindung ist vorgesehen, dass die Außenverzahnung als Axialverzahnung ausgebildet ist. Dadurch wird gewährleistet, dass dann, wenn die Spindelmutter axial verschoben wird, kein Drehmoment über das Getriebe auf den Antriebsmotor ausgeübt wird. Insbesondere wird dadurch gewährleistet, dass die Spindelmutter jederzeit axial verlagerbar ist, weil beispielsweise das Reibmoment des Getriebes und des Antriebsmotors nicht hemmend auf die Verschiebung der Spindelmutter wirken kann. Darüber hinaus ist die Axialverzahnung auch kostengünstig herstellbar. Das durch die Außenverzahnung und die Verzahnung gebildete Zahnradgetriebe ist zweckmäßigerweise derart ausgebildet, dass die Zähne der jeweiligen Verzahnung in Abhängigkeit ihres Materials geformt und dimensioniert sind. So ist insbesondere vorgesehen, dass Zähne, die aus einem weniger festen Material gefertigt sind, eine größere Zahnbreite aufweisen, als Zähne, die aus einem festeren Material gefertigt sind. Die Geometrie der Verzahnung beziehungsweise des Getriebes ist dabei zweckmäßigerweise derart gewählt, dass unter allen Umgebungsbedingungen eine ausreichende Überdeckung der Zähne und damit eine sichere Drehmomentübertragung gewährleistet ist.

Weiterhin ist bevorzugt vorgesehen, dass das Antriebsrad als Antriebshohlrad ausgebildet ist und die Verzahnung als Innenverzahnung des Antriebshohlrads. Dadurch ergibt sich, dass das Antriebshohlrad koaxial zu der Spindelmutter angeordnet ist und die Spindelmutter durch das Antriebshohlrad hindurchgeführt ist. Hierdurch ergibt sich eine vorteilhafte kompakte Ausführungsform des Bremskraftverstärkers. Darüber hinaus wird das von dem Antriebshohlrad bereitgestellte Drehmoment gleichmäßig in die Spindelmutter übertragen. Durch eine vorteilhafte Konturierung der Zähne der Außenverzahnung und der Innenverzahnung wird außerdem bevorzugt erreicht, dass Antriebshohlrad und Spindelmutter selbsttätig zueinander zentriert werden. Dazu sind insbesondere die Zahnflanken der Zähen jeweils schräg in Bezug zu einer Radialerstreckung ausgerichtet, sodass die Zähne einen konischen Querschnitt aufweisen.

Gemäß einer bevorzugten Weiterbildung ist außerdem vorgesehen, dass die Spindelmutter einen Axialanschlag für das Antriebshohlrad aufweist. Damit ist die Spindelmutter maximal soweit axial verlagerbar, bis der Axialanschlag gegen das Antriebshohlrad trifft. Dadurch ist die Verlagerbarkeit der Spindelmutter in zumindest einer axialen Richtung begrenzt. Insbesondere kann dadurch erreicht werden, dass sicher verhindert wird, dass sich bei einer Axialverschiebung die Außenverzahnung von der Verzahnung löst beziehungsweise außereingriff gerät. Durch den Axialanschlag wird außerdem eine bevorzugte Ausgangsstellung der Spindelmutter in Bezug auf das Antriebshohlrad definiert.

Weiterhin ist bevorzugt vorgesehen, dass der Axialanschlag wenigstens abschnittsweise senkrecht zur Axialerstreckung der Spindelmutter ausgebildet ist. Damit bildet der Axialanschlag einen senkrecht zum Bewegungsweg der Spindelmutter ausgerichteten Anschlag, der insofern flächig beziehungsweise senkrecht auf das Antriebshohlrad trifft. Hierdurch können besonders große axiale Kräfte übertragen werden.

Gemäß einer alternativen Ausführungsform der Erfindung ist bevorzugt vorgesehen, dass der Axialanschlag wenigstens abschnittsweise geneigt zur Axialerstreckung der Spindelhülse ausgerichtet ist. Durch den geneigten Abschnitt des Axialanschlags wird erreicht, dass neben einer Axialkraft auch Radialkräfte von der Spindelmutter auf das Antriebshohlrad übertragen werden, wodurch insbesondere eine vorteilhafte Zentrierung von Spindelmutter zu Antriebshohlrad erreicht wird, wenn der Axialanschlag gegen das Antriebshohlrad gedrängt wird.

Besonders bevorzugt ist der Axialanschlag konisch ausgebildet, sodass er eine sich über den gesamten Umfang erstreckende und geneigt zur Axialerstreckung der Spindelhülse ausgerichtete Anschlagsfläche aufweist. Durch die konische Ausbildung ist eine besonders vorteilhafte selbsttätige Zentrierung von Spindelmutter zu Antriebshohlrad gewährleistet.

Zweckmäßigerweise weist das Antriebshohlrad einen komplementär zu dem Axialanschlag ausgebildeten Anschlag auf. Dadurch wird eine vorteilhafte Passung und ein vorteilhaftes Zusammenspiel zwischen Spindelmutter und Antriebshohlrad gewährleistet. Insbesondere dann, wenn der Axialanschlag abschnittsweise oder vollumfänglich konisch ausgebildet ist, ergibt sich durch die komplementäre Ausbildung des Anschlags des Antriebshohlrads eine vorteilhafte Zentrierung.

Gemäß einer bevorzugten Weiterbildung der Erfindung ist vorgesehen, dass die Außenverzahnung der Spindelmutter bis in den Axialanschlag hineinreicht. Damit weist der Axialanschlag einen Abschnitt der Verzahnung beziehungsweise Außenverzahnung auf, wodurch der Verlagerungsweg der Spindelmutter maximiert wird und insbesondere im Bereich des Axialanschlags hohe Drehmomente übertragen werden können.

Gemäß einer bevorzugten Weiterbildung der Erfindung ist vorgesehen, dass der Spindelmutter wenigstens ein Federelement zugeordnet ist, welches die Spindelmutter mit dem Axialanschlag gegen das Antriebshohlrad drängt. Durch das Federelement wird erreicht, dass die Spindelmutter automatisch in die zuvor bereits genannte Ausgangsstellung bewegt wird. Insbesondere wirkt das Federelement der Bremskraft entgegen, sodass nach einem durchgeführten Bremsvorgang das Getriebe durch das Federelement in seine Ausgangsstellung selbsttätig zurückverbracht wird. Hierdurch wird auf einfache Art und Weise gewährleistet, dass auch dann, wenn die Spindelmutter axial bezüglich des Antriebshohlrads verschoben wurde, der Ausgangszustand automatisch wieder hergestellt wird.

Die erfindungsgemäße Bremseinrichtung mit den Merkmalen des Anspruchs 12 zeichnet sich durch den erfindungsgemäßen Bremskraftverstärker aus. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Besonders bevorzugt bildet der Druckkolben die Spindelstange oder wird in direkter Verlängerung der Spindelstange von dieser mechanisch beaufschlagt. Damit ist der Druckkolben insbesondere des Hauptbremszylinders integraler Bestandteil des Bremskraftverstärkers, wodurch eine besonders kompakte Ausführungsform der Bremseinrichtung zur Verfügung gestellt wird.

Im Folgenden sollen die Erfindung und ihre Vorteile anhand von Ausführungsbeispielen näher erläutert werden. Dazu zeigen
- Figur 1: einen Bremskraftverstärker in einer perspektiven Schnittdarstellung,
- Figur 2: eine Querschnittdarstellung durch ein Getriebe des Bremskraftverstärkers,
- Figur 3: eine vereinfachte Längsschnittdarstellung des Getriebes,
- Figuren 4A und 4B: Gestaltungsvarianten eines Axialanschlags einer Spindelmutter des Getriebes und
- Figur 5: eine perspektive Teildarstellung des Getriebes.

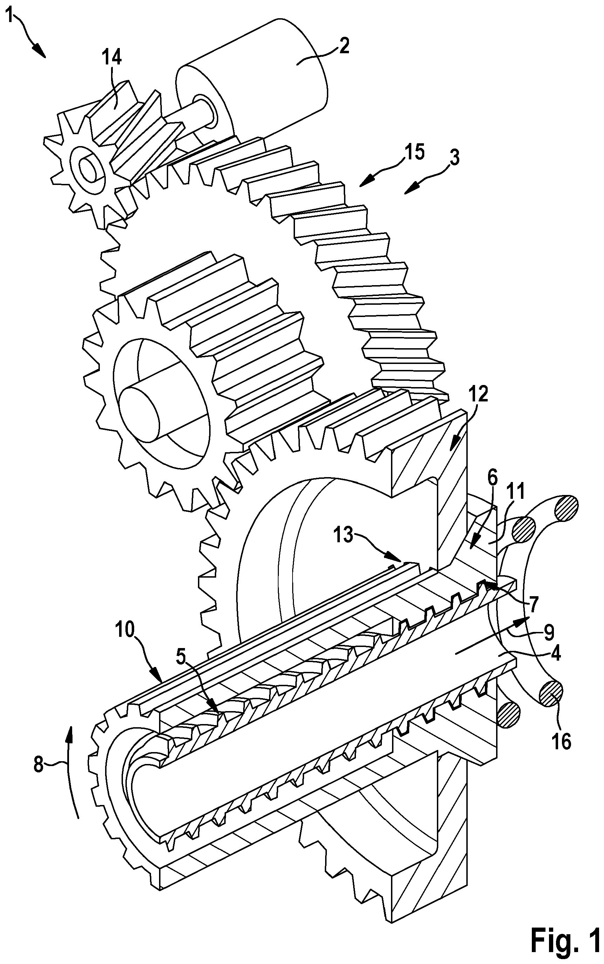

Figur 1 zeigt in einer vereinfachten Darstellung einen Bremskraftverstärker für einen hier nicht näher dargestellten Hauptbremszylinder eines Kraftfahrzeugs.

Der Bremskraftverstärker 1 weist einen hier vereinfacht dargestellten Antriebsmotor 2 auf, der als Elektromotor ausgebildet und durch ein Getriebe 3 mit einem Druckkolben wirkverbunden ist. Der Druckkolben ist dabei vorliegend nur abschnittsweise und in einem Längsschnitt dargestellt. Der Druckkolben ist als Hohlstange ausgebildet, die ein Außengewinde 5 aufweist. Axial ist der Druckkolben einendig mit dem Hauptbremszylinder und anderendig mit einem Bremspedal des den Bremskraftverstärker 1 aufweisenden Kraftfahrzeugs mechanisch verbunden. Der Druckkolben ist dabei axial verlagerbar ausgebildet, um bei Betätigen des Bremspedals eine Kraft auf den Hauptbremszylinder zu dessen Betätigung auszuüben.

Der Druckkolben 4 bildet durch das Außengewinde 5 eine Spindelstange, auf welcher eine Spindelmutter 6 drehbar angeordnet ist. Die Spindelmutter 6 weist abschnittsweise ein Innengewinde 7 auf, das mit dem Außengewinde 5 in Eingriff steht. Das Außengewinde 5 und das Innengewinde 7 sind dabei jeweils als Trapezgewinde ausgebildet. Das Außengewinde 5 erstreckt sich dabei axial gesehen über einen mehr als doppelt so großen Abschnitt wie das Innengewinde 7. Wird die Spindelmutter 6 in eine Rotationsbewegung versetzt, wie durch einen Pfeil 8 angedeutet, führt dies durch die ineinandergreifenden Trapezgewinde zu einer axialen Verlagerung des die Spindelstange bildenden Druckkolbens 4, wie durch einen Pfeil 9 gezeigt.

Die Spindelmutter 6 weist außerdem eine Außenverzahnung 10 auf, mit mehreren sich axial erstreckenden Zähnen. Weiterhin weist die Spindelmutter 6 an einem Ende einen Axialanschlag 11 auf, der einen konusförmigen Längsschnitt aufweist.

Das Getriebe 3 weist weiterhin ein Antriebshohlrad 12 auf, das ein mit der Außenverzahnung 10 in Eingriff stehende Innenverzahnung 13 aufweist. Dadurch, dass die Außenverzahnung 10 und das Innenverzahnung 13 axial ausgerichtet sind, ist die Spindelmutter 6 axial zu dem Antriebshohlrad 12 verschiebbar. Weiterhin weist das Antriebshohlrad 12 eine Außenverzahnung auf, mit welcher das Antriebshohlrad 12 mit einem Zwischenzahnrad 15 wirkverbunden ist, das eine Übersetzungsstufe aufweist und mit einem Antriebsritzel 14 des Elektromotors 2 kämmt.

Wird der Elektromotor 2 angesteuert, so wird ein Drehmoment auf das Antriebshohlrad 12 ausgeübt, welches durch das Innengewinde 13 die Spindelmutter 6 mitnimmt und in eine Rotationsbewegung versetzt. Weil die Spindelstange 4 beziehungsweise der Druckkolben drehfest gelagert ist, wird durch die Drehung der Spindelmutter 6 eine Axialbewegung des Druckkolbens erzeugt und der Hauptbremszylinder betätigt. Hierdurch kann ein automatischer Bremsvorgang eingeleitet werden oder der Fahrer durch das Erzeugen einer zusätzlichen Bremskraft unterstützt werden. Betätigt der Fahrer das Bremspedal schneller als der Elektromotor 2 reagieren kann oder wenn der Elektromotor 2 beziehungsweise der Bremskraftverstärker 1 einen Defekt aufweist, so ist es ihm möglich den Druckkolben aufgrund der axialen Verlagerbarkeit der Spindelmutter 6 bezüglich des Antriebshohlrads 12 rein mechanisch zu betätigen. Dabei drückt er die Spindelstange 4 zusammen mit der Spindelmutter 6 axial durch das Antriebshohlrad 12. Durch ein Federelement 16, insbesondere Schraubenfeder, wird die Spindelmutter 6 mit dem Axialanschlag 11 gegen das Antriebshohlrad 12 zurückgedrängt, sodass der Axialanschlag 11 an dem Antriebshohlrad 12 anliegt und ein weiteres Verschieben unmöglich ist. Durch das Federelement wird das Getriebe 3 insofern vorgespannt in Richtung eines Ausgangszustands.

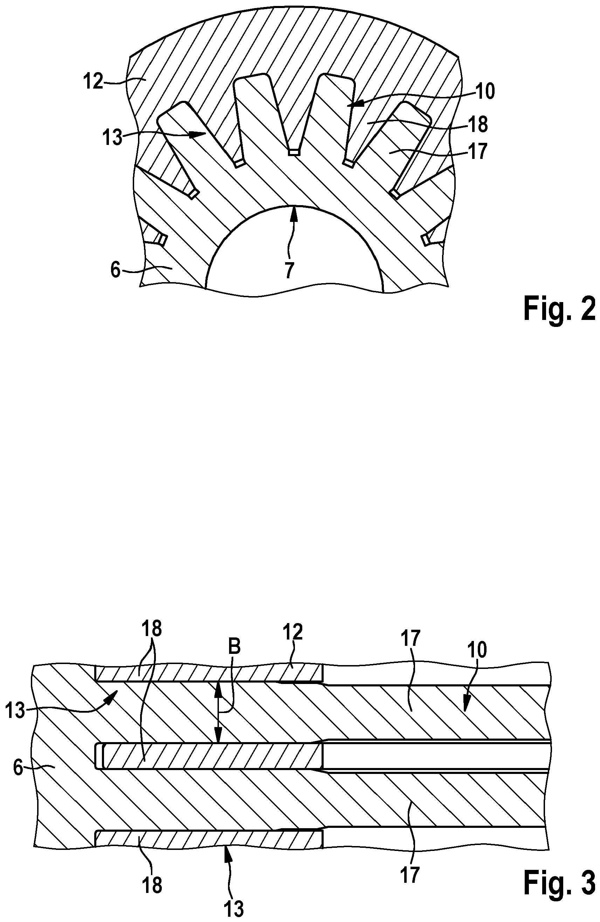

Figur 2 zeigt einen Querschnitt durch das Antriebshohlrad 12. Hierbei ist ersichtlich, dass Zähne 17 des Außengewindes 10 und die damit kämmenden Zähne 18 des Innengewindes 13 jeweils geneigte Zahnflanken aufweisen, sodass die Zähne 17, 18 jeweils einen trapezförmigen Querschnitt aufweisen. Dadurch wirken die ineinandergreifenden Zähne 17 und 18 zentrierend für die Spindelmutter 6 und das Antriebshohlrad 12. Durch die Wahl der Kontur der Zähne 17, 18 wird gewährleistet, dass Antriebshohlrad 12 und Spindelmutter 6 automatisch zueinander zentriert werden. Insbesondere dann, wenn das Antriebshohlrad 12 durch den Antriebsmotor 2 angetrieben wird, um ein Drehmoment zu übertragen, wird aufgrund der geneigten Zahnflanken eine radiale Zentrierung von Antriebshohlrad 12 zur Spindelmutter 6 durchgeführt, wodurch Antriebshohlrad 12 und Spindelmutter 6 automatisch optimal zueinander ausgerichtet werden.

Figur 3 zeigt eine vereinfachte Längsschnittdarstellung des Getriebes 3 im Bereich des Antriebshohlrads 12. Insbesondere hier ist zu erkennen, dass die Zähne 18 des Antriebshohlrads 12 sich weniger weit axial erstrecken, wie die Zähne 17 des Antriebshohlrads 12, sodass die Spindelmutter 6 entsprechend der Längserstreckung der Zähne 17 axial bezüglich des Antriebshohlrads 12 verlagerbar ist, ohne dass die Drehmitnahme der Verzahnung verloren geht. Die Zahnbreite der Zähne 17 und 18 wird vorteilhafterweise in Abhängigkeit ihrer Materialfestigkeit gewählt. Dabei werden Materialeigenschaften der Spindelmutter 6 und des Antriebshohlrads 12 im Verhältnis zueinander gestellt und die Zahnbreiten entsprechend dieses Verhältnisses gewählt. Bei dem hier dargestellten Ausführungsbeispiel ist die Spindelmutter 6 aus einem weniger festen Material im Vergleich zu dem Antriebshohlrad 12 gefertigt, und hat somit auch eine im Vergleich größere Zahnbreite B. Die Geometrie der Verzahnung, also von Innenverzahnung 13 und Außenverzahnung 10, ist dabei derart gewählt, dass bei allen erwarteten Umgebungsbedingungen, wie insbesondere Temperatur oder Feuchtigkeit, eine ausreichende Überdeckung der Zähne 17 und 18 zur Drehmitnahme gewährleistet ist.

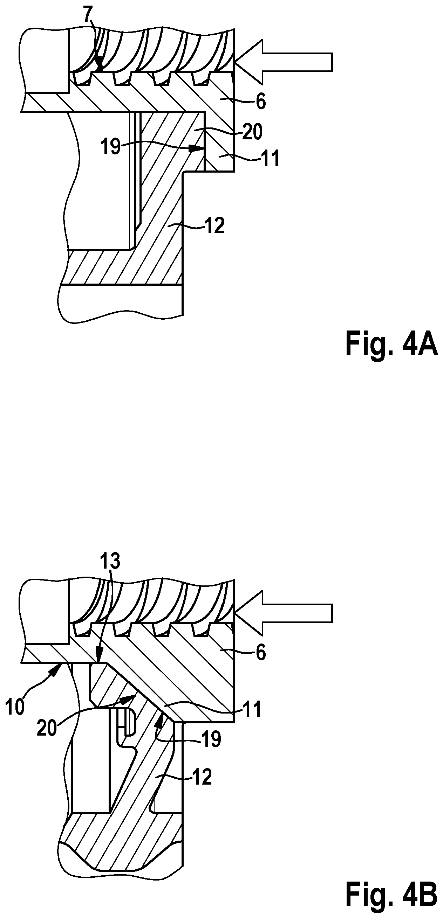

Figuren 4A und 4B zeigen in jeweils einer Längsschnittdarstellung des Getriebes 1 unterschiedliche Ausführungsformen des Axialanschlags 11 der Spindelmutter 6.

Figur 4A zeigt dazu den Axialanschlag 11 gemäß einem ersten Ausführungsbeispiel, bei welchem der Axialanschlag 11 sich senkrecht zur Verlagerrichtung der Spindelmutter 6 beziehungsweise senkrecht zur Axialerstreckung der Spindelmutter 6 radial nach außen erstreckt, sodass er eine flache beziehungsweise senkrechte Anschlagsfläche 19 bildet. Das Antriebshohlrad 12 ist komplementär zu dem Axialanschlag 11 ausgebildet, sodass es ebenfalls einen Anschlag 20 aufweist, der eine zu der Anschlagsfläche 19 komplementäre Anschlagsfläche bildet. Bei dem Ausführungsbeispiel von Figur 4A wird erreicht, dass hohe Axialkräfte von der Spindelmutter 6 auf das Antriebshohlrad 12 übertragen und daran abgestützt werden können. Ein Pfeil in den Figuren 4A und 4B zeigt dabei beispielhaft die axiale Belastung der Spindelmutter 6 an. So wird die Spindelmutter 6 insbesondere durch das Federelement 16 mit dem Axialanschlag 11 gegen den Anschlag 20 des Antriebshohlrads 12 gedrängt. Durch den Axialanschlag 11 wird damit eine Ausgangsstellung der Spindelmutter 6 in Bezug zu dem Antriebshohlrad 12 definiert und automatisch erreicht, wenn beispielsweise ein Benutzer die Betätigung eines Bremspedals beendet. Durch das Federelement 16 wird die Spindelmutter 6 automatisch in die Ausgangsstellung zurückgeschoben.

Figur 4B zeigt ein weiteres Ausführungsbeispiel, wie es auch in Figur 1 gezeigt ist, bei welchem der Axialanschlag 11 konisch ausgebildet ist und sich damit über den gesamten Umfang erstreckend geneigt zur Axialerstreckung der Spindelhülse 6 erstreckt. Dadurch ergibt sich eine konische Anschlagsfläche 19, die mit einer entsprechend konisch ausgebildeten Anschlagsfläche des Anschlags 20 des Antriebshohlrads 12 zusammenwirkt. Durch die geneigte Anschlagsfläche 19 wird erreicht, dass die Axiallast sowohl axial als auch radial abgestützt wird. Insbesondere durch die radiale Abstützung erfolgt dabei eine vorteilhafte Zentrierung von Spindelmutter 6 zu Antriebshohlrad 12. Die Verteilung der Kraft entlastet dabei nicht nur die Schnittstelle, sondern reduziert gleichzeitig auch die radiale Deformation der Spindelmutter 6, welche durch die Kraftverteilung aus dem Trapezgewinde beziehungsweise aus dem Eingriff mit der Spindelstange 4 erzeugt wird.

Wird die Spindelmutter 6 somit durch den Antriebsmotor 2 mittels des Getriebes 3 angetrieben, um die Spindelstange 4 zur Betätigung des Druckkolbens zu verlagern, stützt sich die Spindelmutter 6 dabei vorteilhaft an dem durch den Axialanschlag 11 an dem Anschlag 20 des Antriebshohlrads 12 ab.

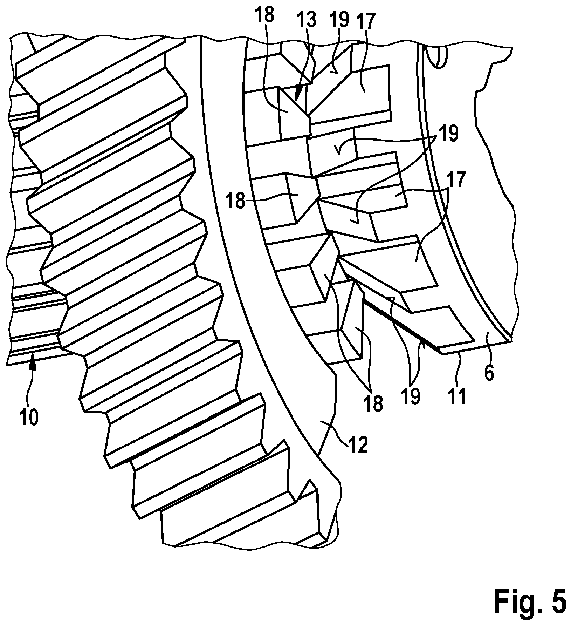

Figur 5 zeigt eine perspektive Teildarstellung des Getriebes 1 im Bereich des Antriebshohlrads 12 gemäß einem weiteren Ausführungsbeispiel. Gemäß diesem Ausführungsbeispiel ist vorgesehen, dass sich die Außenverzahnung 10 der Spindelmutter 6 bis in den Axialanschlag 11 hineinerstreckt. Der Axialanschlag 11 ist dabei gemäß dem Ausführungsbeispiel von Figur 4B ausgebildet, mit einer konischen Anschlagsfläche 19. Aufgrund dessen, dass sich die Außenverzahnung 10 bis in den Axialanschlag 11 hineinerstreckt, wird die Anschlagsfläche 19 über dem Umfang verteilt gleichmäßig unterbrochen, sodass der Axialanschlag durch mehrere geneigt zur Axialerstreckung der Spindelhülse 6 ausgerichtete Anschlagsflächen 19 gebildet wird. Die Zähne 18 der Innenverzahnung 13 des Antriebshohlrads 12 überlappen somit bereichsweise in dem Axialanschlag 11, wenn die Spindelmutter 6 bis an das Antriebshohlrad 12 herangeführt ist, sodass die Anschlagsflächen 19 auf entsprechend ausgebildete Anschlagsgegenflächen des Anschlags 20 des Antriebshohlrads 12 treffen.

Durch diese überlappende Ausführungsform wird erreicht, dass im Normalbetrieb, wenn die Spindelmutter 6 mit dem Axialanschlag 11 an dem Antriebshohlrad 12 anliegt, die Verzahnung zwischen Spindelmutter 6 und Antriebshohlrad 12 eine größtmögliche Überdeckung aufweist, sodass hohe Drehmomente sicher übertragen werden können.

## Patentansprüche

1. Bremskraftverstärker (1) für einen Hauptbremszylinder eines Kraftfahrzeugs, mit einem Antriebsmotor (2), der durch ein Getriebe (3) mit einem mit einem Bremspedal des Kraftfahrzeugs mechanisch koppelbaren Druckkolben für den Hauptbremszylinder verbunden/verbindbar ist, wobei das Getriebe (3) eine drehbare Spindelmutter (6) mit einem Innengewinde (7) und eine drehfeste, axial verlagerbare Spindelstange (4) mit einem Außengewinde (5) aufweist, wobei die Gewinde (5,7) miteinander in Eingriff stehen, um eine Rotationsbewegung des Antriebsmotors (2) in eine Translationsbewegung der Spindelstange (4) zu wandeln, und wobei die Spindelmutter (6) eine Außenverzahnung (10) aufweist, die in Eingriff mit einer Verzahnung (13) eines Antriebsrads (12) des Getriebes (3) steht, **dadurch gekennzeichnet, dass** die Spindelmutter (6) axial zu dem Antriebsrad (12) verlagerbar ist.

2. Bremskraftverstärker nach Anspruch 1, **dadurch gekennzeichnet, dass** sich die Außenverzahnung (10) der Spindelmutter (6) über einen hülsenförmigen Abschnitt der Spindelmutter (6) weiter erstreckt als die Verzahnung (13) des Antriebsrads (12), sodass Außenverzahnung (10) und Verzahnung (13) unabhängig von einer axialen Verlagerung der Spindelmutter (6) zur Drehmitnahme in Eingriff stehen.

3. Bremskraftverstärker nach einem der vorhergehenden Ansprüche, **dadurch gekennzeichnet, dass** die Außenverzahnung (10) als Axialverzahnung ausgebildet ist.

4. Bremskraftverstärker nach einem der vorhergehenden Ansprüche, **dadurch gekennzeichnet, dass** das Antriebsrad als Antriebshohlrad (12) ausgebildet ist und die Verzahnung als Innenverzahnung (13) des Antriebshohlrads (12).

5. Bremskraftverstärker nach Anspruch 4, **dadurch gekennzeichnet, dass** die Spindelmutter (6) einen Axialanschlag (11) für das Antriebshohlrad (12) aufweist.

6. Bremskraftverstärker nach Anspruch 5, **dadurch gekennzeichnet, dass** der Axialanschlag (11) wenigstens abschnittsweise senkrecht zur Axialerstreckung der Spindelmutter (6) ausgerichtet ist.

7. Bremskraftverstärker nach einem der vorhergehenden Ansprüche 5 oder 6, **dadurch gekennzeichnet, dass** der Axialanschlag (11) wenigstens abschnittsweise geneigt zur Axialerstreckung der Spindelmutter (6) ausgerichtet ist.

8. Bremskraftverstärker nach einem der vorhergehenden Ansprüche 5 bis 7, **dadurch gekennzeichnet, dass** der Axialanschlag (11) konisch ausgebildet ist.

9. Bremskraftverstärker nach einem der vorhergehenden Ansprüche 5 bis 8, **dadurch gekennzeichnet, dass** das Antriebshohlrad (12) einen komplementär zu dem Axialanschlag (11) ausgebildeten Anschlag (20) aufweist.

10. Bremskraftverstärker nach einem der vorhergehenden Ansprüche 5 bis 9, **dadurch gekennzeichnet, dass** die Außenverzahnung (10) der Spindelmutter (6) bis in den Axialanschlag (11) hineinreicht.

11. Bremskraftverstärker nach einem der vorhergehenden Ansprüche 5 bis 10, **dadurch gekennzeichnet, dass** der Spindelmutter (6) wenigstens ein Federelement (16) zugeordnet ist, welches die Spindelmutter (6) mit dem Axialanschlag (11) gegen das Antriebshohlrad (12) drängt.

12. Bremseinrichtung für ein Kraftfahrzeug, mit einem von einem Fahrer betätigbaren Bremspedal, das mechanisch mit einem Druckkolben für einen Hauptbremszylinder gekoppelt ist, **gekennzeichnet durch** einen dem Druckkolben zugeordneten Bremskraftverstärker (1) nach einem der Ansprüche 1 bis 11.

13. Bremseinrichtung nach Anspruch 12, **dadurch gekennzeichnet, dass** der Druckkolben die Spindelstange (4) bildet oder in direkter Verlängerung der Spindelstange (4) von dieser mechanisch beaufschlagt wird.

## Claims

1. Brake booster (1) for a master brake cylinder of a motor vehicle, having a drive motor (2) which by way of a gearbox (3) is connected/capable of being connected to a pressure piston for the master brake cylinder that is capable of being mechanically coupled to a brake pedal of the motor vehicle, wherein the gearbox (3) has a rotatable spindle nut (6) having an internal thread (7) and a rotationally fixed, axially displaceable spindle bar (4) having an external thread (5), wherein the threads (5, 7) are mutually engaged so as to convert a rotating movement of the drive motor (2) to a translatory movement of the spindle bar (4), and wherein the spindle nut (6) has an external toothing (10) which engages in a toothing (13) of a drive wheel (12) of the gearbox (3), **characterized in that** the spindle nut (6) is axially displaceable relative to the drive wheel (12).

2. Brake booster according to Claim 1, **characterized in that** the external toothing (10) of the spindle nut (6) extends further across a sleeve-shaped portion of the spindle nut (6) than the toothing (13) of the drive wheel (12) so that the external toothing (10) and the toothing (13) are engaged for rotating entrainment independently of an axial displacement of the spindle nut (6).

3. Brake booster according to one of the preceding claims, **characterized in that** the external toothing (10) is configured as an axial toothing.

4. Brake booster according to one of the preceding claims, **characterized in that** the drive wheel is configured as a drive hollow gear (12) and the toothing is configured as the internal toothing (13) of the drive hollow gear (12).

5. Brake booster according to Claim 4, **characterized in that** the spindle nut (6) has an axial detent (11) for the drive hollow gear (12).

6. Brake booster according to Claim 5, **characterized in that** the axial detent (11) at least in portions is aligned so as to be perpendicular to the axial extent of the spindle nut (6).

7. Brake booster according to one of preceding Claims 5 or 6, **characterized in that** the axial detent (11) at least in portions is aligned so as to be inclined to the axial extent of the spindle nut (6).

8. Brake booster according to one of preceding Claims 5 to 7, **characterized in that** the axial detent (11) is configured so as to be conical.

9. Brake booster according to one of preceding Claims 5 to 8, **characterized in that** the drive hollow gear (12) has a detent (20) which is configured so as to be complementary to the axial detent (11).

10. Brake booster according to one of preceding Claims 5 to 9, **characterized in that** the external toothing (10) of the spindle (6) reaches into the axial detent (11).

11. Brake booster according to one of preceding claims 5 to 10, **characterized in that** the spindle nut (6) is assigned at least one spring element (16) which urges the spindle nut (6) by way of the axial detent (11) towards the drive hollow gear (12).

12. Brake installation for a motor vehicle, having a brake pedal which is activatable by a driver and is mechanically coupled to a pressure piston for a master brake cylinder, **characterized by** a brake booster (1) according to one of Claims 1 to 11, said brake booster (1) being assigned to the pressure piston.

13. Brake installation according to Claim 12, **characterized in that** the pressure piston forms the spindle bar (4) or is mechanically impinged by said spindle bar (4) as a direct extension of the latter.

## Revendications

1. Servofrein (1) pour un maître-cylindre de frein d'un véhicule automobile, comprenant un moteur d'entraînement (2) qui est/peut être connecté par une transmission (3) à un piston de pression pour le maître-cylindre de frein pouvant être accouplé mécaniquement à une pédale de frein du véhicule automobile, la transmission (3) présentant un écrou de broche rotatif (6) avec un filetage intérieur (7) et une tige de broche (4) fixée en rotation, déplaçable axialement, avec un filetage extérieur (5), les filetages (5, 7) étant en prise l'un avec l'autre, afin de convertir un mouvement de rotation du moteur d'entraînement (2) en un mouvement de translation de la tige de broche (4), et l'écrou de broche (6) présentant une denture extérieure (10) qui est en prise avec une denture (13) d'une roue d'entraînement (12) de la transmission (3), **caractérisé en ce que** l'écrou de broche (6) peut être déplacé axialement par rapport à la roue d'entraînement (12).

2. Servofrein selon la revendication 1, **caractérisé en ce que** la denture extérieure (10) de l'écrou de broche (6) s'étend sur une portion en forme de douille de l'écrou de broche (6) plus loin que la denture (13) de la roue d'entraînement (12) de telle sorte que la denture extérieure (10) et la denture (13) soient en prise indépendamment d'un déplacement axial de l'écrou de broche (6) en vue de l'entraînement en rotation.

3. Servofrein selon l'une quelconque des revendications précédentes, **caractérisé en ce que** la denture extérieure (10) est réalisée sous forme de denture axiale.

4. Servofrein selon l'une quelconque des revendications précédentes, **caractérisé en ce que** la roue d'entraînement est réalisée sous forme de couronne d'entraînement (12) et la denture est réalisée sous forme de denture intérieure (13) de la couronne d'entraînement (12).

5. Servofrein selon la revendication 4, **caractérisé en ce que** l'écrou de broche (6) présente une butée axiale (11) pour la couronne d'entraînement (12).

6. Servofrein selon la revendication 5, **caractérisé en ce que** la butée axiale (11) est orientée au moins en partie perpendiculairement à l'étendue axiale de l'écrou de broche (6).

7. Servofrein selon l'une quelconque des revendications précédentes 5 ou 6, **caractérisé en ce que** la butée axiale (11) est orientée au moins en partie de manière inclinée par rapport à l'étendue axiale de l'écrou de broche (6).

8. Servofrein selon l'une quelconque des revendications précédentes 5 à 7, **caractérisé en ce que** la butée axiale (11) est réalisée sous forme conique.

9. Servofrein selon l'une quelconque des revendications précédentes 5 à 8, **caractérisé en ce que** la couronne d'entraînement (12) présente une butée (20) réalisée de manière complémentaire de la butée axiale (11).

10. Servofrein selon l'une quelconque des revendications précédentes 5 à 9, **caractérisé en ce que** la denture extérieure (10) de l'écrou de broche (6) s'étend jusque dans la butée axiale (11).

11. Servofrein selon l'une quelconque des revendications précédentes 5 à 10, **caractérisé en ce que** l'écrou de broche (6) est associé à au moins un élément de ressort (16) qui pousse l'écrou de broche (6) avec la butée axiale (11) contre la couronne d'entraînement (12).

12. Dispositif de frein pour un véhicule automobile, comprenant une pédale de frein pouvant être actionnée par un conducteur, qui est accouplée mécaniquement à un piston de pression pour un maître-cylindre de frein, **caractérisé par** un servofrein (1) selon l'une quelconque des revendications 1 à 11, associé au piston de pression.

13. Dispositif de frein selon la revendication 12, **caractérisé en ce que** le piston de pression forme la tige de broche (4) ou est sollicité mécaniquement par celle-ci dans le prolongement direct de la tige de broche (4).
